# EUROPEAN PATENT SPECIFICATION

(11) **EP 2 835 845 B1**
(45) Date of publication and mention of the grant of the patent: **28.11.2018**
(21) Application number: 14172492.2
(22) Date of filing: 16.06.2014
(51) Int. Cl.: H01M 2/16, H01M 10/06, H01M 2/02

(54) **Lead-acid battery container**
Bleisäurebatteriebehälter
Bac de batterie au plomb-acide

(30) Priority: 06.08.2013 JP 2013163264; 07.04.2014 JP 2014078366
(43) Date of publication of application: 11.02.2015
(73) Proprietor: GS Yuasa International Ltd., Kisshoin, Minami-ku, Kyoto-shi, Kyoto 601-8520 (JP)
(72) Inventor: Fujiwara, Yoshiomi, Kyoto, 601-8520 (JP)
(74) Representative: Isarpatent

(56) References cited:
- JP-A- H1 079 241
- JP-A- H07 312 208
- US-A1- 2005 170 238
- US-B1- 6 602 637
- FERG ET AL: "The effect of Pb and other elements found in recycled polypropylene on the manufacturing of lead-acid battery cases", POLYMER TESTING, ELSEVIER, AMSTERDAM, NL, vol. 26, no. 8, 14 November 2007 (2007-11-14), pages 1001-1014, XP022344515, ISSN: 0142-9418, DOI: 10.1016/J.POLYMERTESTING.2007.07.001

## Description

### FIELD

The present invention relates to a lead-acid battery container.

### BACKGROUND

In the automobile field, recent demand for improvement in fuel economy or saving space of automobiles has resulted in miniaturization such as weight reduction of components or optimization of the arrangement of parts. As a result, lead-acid batteries have increasingly been being located closer to engines than before and exposed to high temperatures. Since an engine becomes very hot when driven, a lead-acid battery must continue to exert a required function for a long term even under its surrounding hot environment. For this purpose, improvement in heat resistance of a member to be used for a lead-acid battery is demanded more than before.

There is a battery in which the heat resistance of its casing such as a container has been improved. The heat resistance is improved by addition of a halogenated flame retardant such as a brominated flame retardant and a chlorinated flame retardant to a polypropylene-based resin. The polypropylene-based resin is highly heat resistant and is used as a material for a casing, such as a container of a lead-acid battery (JP-A-10-79241).

However, it is known that the above-mentioned halogenated flame retardant, especially a chlorinated flame retardant, causes resin to undergo thermal degradation due to dehydrochlorination reaction. Consequently, there is also a battery in which a lead-based stabilizer or the like has been added to a polypropylene-based resin in addition to a halogenated flame retardant in order to suppress the thermal degradation (JP-A-5-247299). The article "The effect of Pb and other elements found in recycled polypropylene on the manufacturing of lead-acid battery cases" in the Polymer Testing 26 (2007), pages 1001-1014 relates to X-ray fluorescence (XRF) analysis as a reliable method to quantify the amount of the elements found in the plastic and that the concentration of Pb in the plastic can be used as a type of tracer to determine the amount of recycled PP used in the manufacturing of a particular battery case.

### SUMMARY

It, however, is known that a polypropylene-based resin is oxidatively degraded to lower in mechanical strength if it is kept in contact with metal (lead) for a long time. Without using a lead-based stabilizer, however, the thermal degradation of resin cannot be prevented. Therefore, one needs to address cautiously contamination of lead into a feedstock resin for a casing, such as a container for lead-acid batteries on which very high demands in terms of reliability are placed.

The present invention is intended to provide a lead-acid battery container in which degradation of a feedstock resin caused by lead is inhibited. The present invention is also intended to provide a lead-acid battery container which has improved heat resistance. The present invention is defined by the appended claims. It is a lead-acid battery container according to claim 1 comprising a resin composition including a polyolefin-based resin as a main component, wherein the resin composition contains 10 ppm or more and 300 ppm or less of lead, and the resin composition comprises chlorine. Preferred embodiments defined by claims 2 to 9.

After conducting extensive studies, the present inventor found the fact that a lead-based stabilizer or the like can be used while suppressing degradation of a polyolefin-based resin if it is added in such an amount that the lead content may be 300 ppm or less.

That is, the lead-acid battery container according to the present invention is the lead-acid battery container according to claim 1.

### DETAILED DESCRIPTION

The lead-acid battery container according to the present invention comprises a resin composition comprising a polyolefin-based resin as a main component, wherein the resin composition contains 10 ppm or more and 300 ppm or less of lead.

Preferably, the lead content of the resin composition is 10 to 250 ppm. More preferably, the lead content of the resin composition is 50 to 150 ppm.

Examples of the polyolefin-based resin include a polypropylene-based resin.

For example, a propylene-ethylene block copolymer is used preferably as the polypropylene-based resin.

The resin composition may contain a phenolic antioxidant.

The resin composition may contain chlorine. The chlorine content of the resin composition is preferably 5 to 100 ppm.

The thickness of the lead-acid battery container is preferably 1.4 to 2.6 mm.

Preferably, the lead content of the resin composition is 10 to 250 ppm.

The aspects of the present invention can provide a highly reliable lead-acid battery container in which degradation of a feedstock polyolefin-based resin caused by lead is inhibited and which has improved heat resistance.

An embodiment of the present invention is described in detail below.

The embodiment relates to a lead-acid battery container that is made of a resin composition comprising a polyolefin-based resin as a main component.

The polyolefin-based resin is not particularly restricted and examples thereof include polypropylene-based resins, polyethylene-based resins, and the like. The polypropylene-based resins and the polyethylene-based resins also include copolymers comprising propylene or ethylene as a main component.

When the polyolefin-based resin is a polypropylene-based resin, a propylene-ethylene block copolymer is used particularly preferably. The propylene-ethylene block copolymer is a copolymer comprising a crystalline propylene-homopolymerized portion formed by homopolymerization of propylene and a propylene-ethylene-random copolymerized portion formed by copolymerizing ethylene and propylene as well as, as necessary, another alpha-olefin. Such a propylene-ethylene block copolymer has excellent impact resistance and moderate softness.

The resin composition contains lead in an amount 10 ppm or more and 300 ppm or less, preferably 10 to 250 ppm, more preferably 50 to 150 ppm. If the content of lead exceeds 300 ppm, heat resistance deteriorates with oxidative degradation of the lead-acid battery container, which will become difficult to apply to practical use.

Therefore, for example, when the resin composition contains a chlorinated flame retardant, adding a lead-based stabilizer so that the content of lead may be 300 ppm or less can suppress dehydrochlorination reaction by the chlorinated flame retardant while suppressing the oxidative degradation of the polyolefin-based resin caused by lead and thereby can impart heat resistance to the resin composition.

The chlorinated flame retardant is not particularly restricted and examples thereof include chlorinated paraffin, perchlorocyclopentadecane, and the like.

The content of the chlorinated flame retardant in the resin composition is determined so that the resin composition may satisfy flame retardancy of the HB rating or the V-0 rating under the Standard UL94 according to the intended application.

Examples of the lead-based stabilizer include white lead, basic lead sulfite, tribasic lead sulfate, dibasic lead phosphite, dibasic lead phthalate, tribasic lead maleate, silica gel coprecipitated lead silicate, dibasic lead stearate, lead stearate, and lead naphthenate.

According to the embodiment of the present invention, it is possible to suppress dehydrochlorination reaction by chlorine while suppressing oxidative degradation of a polyolefin-based resin caused by lead even when the resin composition has been contaminated with chlorine derived from substances other than the above-described flame retardant.

When a used lead-acid battery container is reused as a resin feedstock, lead may be contained in the recycled resin, and the embodiment of the present invention can be applied to such a case. By mixing a regenerated polyolefin-based resin and a virgin resin together in such a ratio that the content of lead in the resin composition resulting from the mixing may be 300 ppm or less, it is possible to utilize a used polyolefin-based resin effectively while suppressing oxidative degradation by lead.

The resin composition may further comprise a phenolic antioxidant. Inclusion of the phenolic antioxidant makes it possible to more certainly suppress oxidative degradation of the polyolefin-based resin caused by lead.

Examples of the phenolic antioxidant include 2,6-di-tert-butyl-4-methylphenol, n-octadecyl-3-(3,5-di-tert-butyl-4-hydroxyphenyl) propionate, 2-tert-butyl-6-(3-tert-butyl-2-hydroxy-5-methylbenzyl)-4-methylphenyl acrylate, and tetrakis[methylene-3-(3,5-di-tert-butyl-4-hydroxyphenyl) propionate]methane.

The content of the phenolic antioxidant in the resin composition is preferably 0.05 to 1.5% by mass relative to the entire portion of the resin composition. If the content is within this range, oxidative degradation of the polyolefin-based resin caused by lead can be well suppressed.

While the resin composition that constitutes the lead-acid battery container according to the the present invention contains a polyolefin-based resin and lead or a lead-based compound (including a lead-based stabilizer) as main components, the resin composition may further contain, in addition to the above-mentioned chlorinated flame retardant and the phenolic antioxidant, various additives such as, for example, other flame retardants such as brominated flame retardants, phosphorus-based flame retardants and inorganic flame retardants; dripping inhibitors such as fluororesin; fillers such as glass fiber, carbon fiber, and metal filler; stabilizers such as heat stabilizers, antioxidants and UV absorbers; releasing agents, lubricants, antistatic agents, and colorants.

The lead-acid battery container according to the present invention can be prepared in accordance with a conventional method using a variety of forming methods, such as injection molding, extrusion forming, blow molding, press molding, and vacuum molding.

A lead-acid battery comprising the lead-acid battery container according to the embodiment of the present invention is also disclosed. Such a lead-acid battery, which is not particularly restricted, may be, for example, a liquid or valve regulated one having an element including a negative plate comprising spongy lead as a main component of an active material, a positive plate comprising lead dioxide as a main component of an active material, and a porous or nonwoven fabric-like separator interposed between these plates. In the lead-acid battery, the element and an electrolyte solution comprising diluted sulfuric acid as a main component are contained in the lead-acid battery container according to the embodiment of the present invention.

The negative plate includes a grid made of a Pb-Sb alloy or a Pb-Ca alloy and is formed by filling the grid with a pasty active material. In the meantime, although the positive plate is formed in the same way as the negative plate when the positive plate is of a pasted type, it is formed by filling an active material to between a tube made of glass fiber or the like and a spine made of a lead alloy when the positive plate is of a tubular type. These constitutional members to be used may be selected from among publicly known ones according to the purpose and the intended use.

The resin composition that comprises a polyolefin-based resin as a main component and is used for the lead-acid battery container according to the present invention can also be used for a lead-acid battery casing other than a container. The lead-acid battery casing according to this disclosure is not particularly restricted as long as it is a member for containing an electrolyte solution and an element therein, and it may be, for example, a lid, a vent plug, a knob, or the like. The resin composition contains 10 ppm or more and 300 ppm or less, preferably 10 to 250 ppm, more preferably 50 to 150 ppm of lead.

### [Examples]

The embodiment of the present invention is described in more detail with reference to examples.

As a sample to be applied to a test, a polyolefin-based resin (BC3AW produced by Japan Polypropylene Corporation) was used, and a lead stabilizer (tribasic lead sulfate (produced by SAKAI CHEMICAL INDUSTRY CO., LTD.)) and a flame-retardant additive (chlorinated paraffin (Toyoparax produced by TOSOH CORPORATION)) were added as follows. After mixing, they were molded into a flat plate sample with a length of 150 mm, a width of 150 mm, and a thickness of 1.5 mm by using a molding machine set at 220°C. The details of the prepared samples are as follows.

The amount of Pb in the samples was measured with an X-ray fluorescence analyzer (LAB CENTER XRF-1800, Shimadzu Corporation). The amount of Cl was measured by combustion ion chromatography.

### • Conventional Example

A sample having a Cl content in a polyolefin resin (hereinafter also called PP resin) of 0 ppm and a Pb content in the PP resin after adding a lead-based stabilizer of 0 ppm was prepared by adding no flame-retardant additive and no lead-based stabilizer. This sample is named Conventional Example.

### • Comparative Examples 1 and 2

Samples having 5 ppm of Cl content in a PP resin after adding a flame-retardant additive and 0 ppm or 500 ppm of Pb content in the PP resin after adding a lead-based stabilizer were prepared. These samples are named Comparative Examples 1 and 2, respectively.

### • Examples 1, 2, 3, 4 and 5

Samples having 5 ppm of Cl content in a PP resin after adding a flame-retardant additive and 10 ppm, 50 ppm, 200 ppm, 250 ppm or 300 ppm of Pb content in the PP resin after adding a lead-based stabilizer were prepared. These samples are named Examples 1, 2, 3, 4 and 5, respectively.

### • Comparative Examples 3 and 4

Samples having 20 ppm of Cl content in a PP resin after adding a flame-retardant additive and 0 ppm or 500 ppm of Pb content in the PP resin after adding a lead-based stabilizer were prepared. These samples are named Comparative Examples 3 and 4, respectively.

### • Examples 6, 7, 8, 9 and 10

Samples having 20 ppm of Cl content in a PP resin after adding a flame-retardant additive and 10 ppm, 50 ppm, 200 ppm, 250 ppm or 300 ppm of Pb content in the PP resin after adding a lead-based stabilizer were prepared. These samples are named Examples 6, 7, 8, 9 and 10, respectively.

### • Comparative Examples 5 and 6

Samples having 50 ppm of Cl content in a PP resin after adding a flame-retardant additive and 0 ppm or 500 ppm of Pb content in the PP resin after adding a lead-based stabilizer were prepared. These samples are named Comparative Examples 5 and 6, respectively.

### • Examples 11, 12, 13, 14 and 15

Samples having 50 ppm of Cl content in a PP resin after adding a flame-retardant additive and 10 ppm, 50 ppm, 200 ppm, 250 ppm or 300 ppm of Pb content in the PP resin after adding a lead-based stabilizer were prepared. These samples are named Examples 11, 12, 13, 14 and 15, respectively.

### • Comparative Examples 7 and 8

Samples having 100 ppm of Cl content in a PP resin after adding a flame-retardant additive and 0 ppm or 500 ppm of Pb content in the PP resin after adding a lead-based stabilizer were prepared. These samples are named Comparative Examples 7 and 8, respectively.

### • Examples 16, 17, 18, 19 and 20

Samples having 100 ppm of Cl content in a PP resin after adding a flame-retardant additive and 10 ppm, 50 ppm, 200 ppm, 250 ppm or 300 ppm of Pb content in the PP resin after adding a lead-based stabilizer were prepared. These samples are named Examples 16, 17, 18, 19 and 20, respectively.

The following two tests were carried out for the above samples.

### <Heat resistance test>

A heat resistance test, in which each of the above samples is left at rest within a thermostated forced-convection chamber at 150°C and the time at which cracks are formed in the surface is recorded, was carried out in accordance with the provision of JIS K7368:1999. The heat resistance of each sample was evaluated in terms of a percentage determined when the time taken by the heat resistance test of Conventional Example was taken as 100%.

### <Flame Retardancy Test>

A flame retardancy test was carried out, in which a linear burning rate was determined by performing a horizontal burning test in which flame was applied to the bottom end of a sample with the center axis of a burner tube tilted in about 45° to the horizontal plane, in accordance with the provision of JIS C6069 5-11-10:2006. The flame retardancy of each sample was evaluated in terms of the percentage where the linear burning rate in the flame retardancy test of a conventional example was taken as 100%.

The results of the heat resistance test and the flame retardancy test are shown in Table 1.

**[Table 1]**

| | Cl content in PP after flame retardant addition (ppm) | Pb content in PP after lead-based stabilizer addition (ppm) | Heat resistance | Flame retardancy |
|---|---|---|---|---|
| Conventional Example | 0 | 0 | 100 | 100 |
| Comparative Example 1 | 5 | 0 | 99 | 105 |
| Example 1 | 5 | 10 | 110 | 120 |
| Example 2 | 5 | 50 | 112 | 125 |
| Example 3 | 5 | 200 | 110 | 122 |
| Example 4 | 5 | 250 | 108 | 120 |
| Example 5 | 5 | 300 | 105 | 120 |
| Comparative Example 2 | 5 | 500 | 84 | 106 |
| Comparative Example 3 | 20 | 0 | 98 | 110 |
| Example 6 | 20 | 10 | 115 | 122 |
| Example 7 | 20 | 50 | 120 | 124 |
| Example 8 | 20 | 200 | 115 | 121 |
| Example 9 | 20 | 250 | 114 | 125 |
| Example 10 | 20 | 300 | 109 | 117 |
| Comparative Example 4 | 20 | 500 | 90 | 106 |
| Comparative Example 5 | 50 | 0 | 95 | 120 |
| Example 11 | 50 | 10 | 110 | 130 |
| Example 12 | 50 | 50 | 115 | 131 |
| Example 13 | 50 | 200 | 110 | 129 |
| Example 14 | 50 | 250 | 108 | 128 |
| Example 15 | 50 | 300 | 105 | 126 |
| Comparative Example 6 | 50 | 500 | 92 | 122 |
| Comparative Example 7 | 100 | 0 | 93 | 125 |
| Example 16 | 100 | 10 | 105 | 130 |
| Example 17 | 100 | 50 | 103 | 132 |
| Example 18 | 100 | 200 | 101 | 130 |
| Example 19 | 100 | 250 | 101 | 125 |
| Example 20 | 100 | 300 | 101 | 126 |
| Comparative Example 8 | 100 | 500 | 95 | 128 |

As shown in Table 1, regardless of the Cl content in a PP-based resin after the addition of a flame retardant, the results of the heat resistance test and the flame retardancy test were improved in Examples of 1 to 20, in which the Pb content in a PP-based resin after the addition of a lead-based stabilizer was from 10 ppm to 300 ppm, over Conventional Examples and Comparative Examples 1 to 8.

Heat resistance and flame retardancy could be improved over Conventional Example and Comparative Examples 1 to 8. It is believed that this is because flame retardancy was imparted with a chlorine-based flame retardant and the thermal degradation of a PP-based resin due to dehydrochlorination reaction of the chlorine-based flame retardant was suppressed by lead. Especially, this is because deterioration of mechanical strength was prevented, by suppressing the oxidative degradation of the PP-based resin by adjusting the content of lead to 10 ppm to 250 ppm.

On the other hand, in Comparative Examples 1, 3, 5 and 7, in which any lead-based stabilizer was not added and only a flame retardant was added under the condition where the Pb content in a PP-based resin was 0 ppm, flame retardancy was improved over Conventional Example but heat resistance was decreased relative to Conventional Example.

It is believed that flame retardancy can be imparted with a chlorine-based flame retardant to a PP-based resin, but the thermal degradation of a PP-based resin due to dehydrochlorination reaction of the chlorine-based flame retardant could not be suppressed because no lead-based stabilizers were added, so that heat resistance failed to be improved as compared with Conventional Example.

Also in Comparative Examples 2, 4, 6 and 8, in which the Pb content in a PP-based resin at the addition of a lead-based stabilizer was 500 ppm, flame retardancy was improved over the conventional example regardless of the Cl content in the PP-based resin after the addition of a flame retardant. Heat resistance, however, was deteriorated as compared with Conventional Example.

It is believed that flame retardancy can be imparted to a PP-based resin with a chlorine-based flame retardant, but since the lead content was adjusted to over 300 ppm, namely 500 ppm, deterioration in mechanical strength due to oxidative degradation of the PP-based resin failed to be prevented and heat resistance failed to be improved over Conventional Example.

From the foregoing, since the resin composition to be used for the lead-acid battery container according to the embodiment of the present invention has improved heat resistance, the container can tolerate use under a high temperature environment even when the container is configured to be thinner than conventional ones. If a container is configured to be thinner, space can be saved by reducing the space occupied by the container in a lead-acid battery.
Moreover, costs can also be reduced by reducing the resin composition to constitute the container. For example, the thickness of a lead-acid battery container for automobiles of the B series or the D series defined by the JIS Standard can be adjusted to 1.4 mm to 2.6 mm.

## Claims

1. A lead-acid battery container comprising a resin composition including a polyolefin-based resin as a main component,
wherein the resin composition contains 10 ppm or more and 300 ppm or less of lead, and the resin composition comprises chlorine.

2. The lead-acid battery container according to claim 1, wherein a lead content of the resin composition is 10 to 250 ppm.

3. The lead-acid battery container according to claim 1 or 2, wherein the lead content of the resin composition is 50 to 150 ppm.

4. The lead-acid battery container according to claim 1, 2 or 3, wherein the polyolefin-based resin is a polypropylene-based resin.

5. The lead-acid battery container according to claim 4, wherein the polypropylene-based resin is a propylene-ethylene block copolymer.

6. The lead-acid battery container according to claim 1, 2, 3, 4 or 5, wherein the resin composition comprises a phenolic antioxidant.

7. The lead-acid battery container according to claim 1, 2, 3, 4, 5, or 6, wherein a chlorine content of the resin composition is 5 to 100 ppm.

8. The lead-acid battery container according to claim 1, 2, 3, 4, 5, 6, or 7, wherein a thickness of the lead-acid battery container is 1.4 mm to 2.6 mm.

9. A lead-acid battery comprising the container according to claim 1, 2, 3, 4, 5, 6, 7, or 8.

## Patentansprüche

1. Gehäuse für einen Bleiakkumulator, umfassend eine Harzzusammensetzung mit einem Harz auf Polyolefin-Basis als Hauptkomponente,
wobei die Harzzusammensetzung 10 ppm oder mehr und 300 ppm oder weniger Blei enthält und die Harzzusammensetzung Chlor umfasst.

2. Gehäuse für einen Bleiakkumulator nach Anspruch 1, wobei der Bleigehalt der Harzzusammensetzung 10 bis 250 ppm ist.

3. Gehäuse für einen Bleiakkumulator nach Anspruch 1 oder 2, wobei der Bleigehalt der Harzzusammensetzung 50 bis 150 ppm ist.

4. Gehäuse für einen Bleiakkumulator nach Anspruch 1, 2 oder 3, wobei das Harz auf Polyolefin-Basis ein Harz auf Polypropylen-Basis ist.

5. Gehäuse für einen Bleiakkumulator nach Anspruch 4, wobei das Harz auf Polypropylen-Basis ein Propylen-Ethylen-Blockcopolymer ist.

6. Gehäuse für einen Bleiakkumulator nach Anspruch 1, 2, 3, 4 oder 5, wobei die Harzzusammensetzung ein phenolisches Antioxidans enthält.

7. Gehäuse für einen Bleiakkumulator nach Anspruch 1, 2, 3, 4, 5 oder 6, wobei der Chlorgehalt der Harzzusammensetzung 5 bis 100 ppm ist.

8. Gehäuse für einen Bleiakkumulator nach Anspruch 1, 2, 3, 4, 5, 6 oder 7, wobei die Dicke des Gehäuses für einen Bleiakkumulator 1,4 mm bis 2,6 mm ist.

9. Bleiakkumulator, umfassend das Gehäuse nach Anspruch 1, 2, 3, 4, 5, 6, 7 oder 8.

## Revendications

1. Boîtier de batterie au plomb-acide comprenant une composition de résine comportant une résine à base de polyoléfine en tant que composant principal,
dans lequel la composition de la résine contient 10 ppm ou plus, et 300 ppm ou moins, de plomb, et la composition de la résine comprend du chlore.

2. Boîtier de batterie au plomb-acide selon la revendication 1, dans lequel une teneur en plomb de la composition de la résine se situe entre 10 et 250 ppm.

3. Boîtier de batterie au plomb-acide selon la revendication 1 ou la revendication 2, dans lequel la teneur en plomb de la composition de la résine se situe entre 50 et 150 ppm.

4. Boîtier de batterie au plomb-acide selon les revendications 1, 2 ou 3, dans lequel la résine à base de polyoléfine est une résine à base de polypropylène.

5. Boîtier de batterie au plomb-acide selon la revendication 4, dans lequel la résine à base de polypropylène est un copolymère séquencé propylène éthylène.

6. Boîtier de batterie au plomb-acide selon les revendications 1, 2, 3, 4 ou 5, dans lequel la composition de la résine comprend un antioxydant phénolique.

7. Boîtier de batterie au plomb-acide selon les revendications 1, 2, 3, 4, 5 ou 6, dans lequel une teneur en chlore de la composition de la résine se situe entre 5 et 100 ppm.

8. Boîtier de batterie au plomb-acide selon les revendications 1, 2, 3, 4, 5, 6 ou 7, dans lequel une épaisseur du boîtier de la batterie au plomb-acide se situe entre 1,4 mm et 2,6 mm.

9. Batterie au plomb-acide comprenant le boîtier selon les revendications 1, 2, 3, 4, 5, 6, 7, ou 8.
